# EUROPEAN PATENT SPECIFICATION

(11) **EP 1 674 547 B1**
(45) Date of publication and mention of the grant of the patent: **29.02.2012**
(21) Application number: 05077702.8
(22) Date of filing: 30.11.2005
(51) Int. Cl.: C09J 191/00, C09J 131/04, C09J 11/08, C08L 91/00

(54) **Glue for cold glueing of construction materials**
Leim zur Kaltverklebung von Bauelementen
Colle pour le collage à froid de matériaux de construction

(30) Priority: 23.12.2004 BE 200400634
(43) Date of publication of application: 28.06.2006
(73) Proprietor: Muylle-Facon N.V., 8870 Izegem (BE)
(72) Inventor: Torfs, Jan, 8870 Izegem (BE); Muylle, Benoit, 8870 Izegem (BE)
(74) Representative: Ostyn, Frans

(56) References cited:
- EP-A- 0 253 453
- EP-A- 0 627 480
- CA-A1- 2 025 442

## Description

The invention relates to a glue for the cold gluing of construction materials.

The glue is more specifically applied to roofing materials, for instance, for flat roof coverings, pitched roofs etc.

For the cold gluing of construction materials there exist mono-component glues such as poly-urethane, MS-polymers, etc. However, the disadvantage of those products is that it economically is not possible to apply them to fully glued roof coverings (applying the glue all over the surface of the roof), and which moreover are highly sensitive to temperatures.

Other glues used for gluing construction materials, for instance for roof coverings, are bituminous glues. Bitumen is a product which is obtained by refining the heavy fractions of crude oil, the bitumen being separated from the other fractions by means of distillation (vacuum) Consequently, a complex mixture is obtained of non-volatile, natural hydrocarbons having a high molecular weight.

Up to the present, bituminous glues are mainly used for hot applications. Here, the bituminous glue is heated by means of a gas-heated bitumen reservoir, such that the viscosity of the composition is reduced, because of which the bitumen will become workable and may be spread out all over the surface. In order to glue a watertight membrane to insulating panels for instance, a hot air burner will be additionally required. Both these devices constitute a danger to the safety of both customer and contractor, for instance when a roof contains a wooden support, and may cause a severe risk of burns. Moreover, trained personnel are required in order to apply such bituminous glues. Because of the many disadvantages of this hot application, search was already made for bituminous glues which may be used for cold applications. In order to obtain such bituminous glues, the bitumen are brought into a liquid medium.

In this case, a first possibility is to dissolve the bitumen in one or several solvents. However, many of these solvents are containing VOCs (volatile organic components), among which all hydrocarbons and their derivatives. The components are "volatile" when they are producing a certain amount of vapour at room or working temperature. Such VOCs are very poisonous and constitute a danger to the health of men and their environment.

Another disadvantage of the solvent based bituminous glues is that insulating panels which are applied to solvent based bituminous glues may float away when they are not kept in place. The insulating panels will only retain their places after complete drying of the bituminous glue, drying occurring by vaporization of the solvent. Moreover, the insulating panels, consisting for instance out of (expanded) poly-styrene panels, will be partly or entirely affected.

Moreover, conventionally bituminous glues are used with a solvent content of minimal 30%, which will make it difficult to glue two vapour-tight materials, as the gasses being released will be difficult to evacuate. Even when gluing one vapour-tight insulation panel to a porous support, the use of solvent based glues is not to be recommended, as the gasses escaping from the solvents will migrate downwards, causing them to infiltrate the building and a spark, for instance due to a short circuit, may cause an explosion.

Furthermore, solvent based bituminous glues have the disadvantage that they are not applicable to pitched roofs, and they will be difficult, if not at all, to be used both at high temperatures, as these solvent based glues then become very liquid, and the solvents will evaporate very rapidly, and at low temperatures as these solvent based bituminous glues will then become solid.

A solution to these disadvantages in connection with the solvent based bituminous glues is to dissolve the bitumen in a watery medium.

In US 6,776,833 an emulsion is described comprising a bitumen, a suspension of water and a mainly completely hydrated colloidal clay. In DE 3710405 and GB 596610 also water based bituminous emulsions are discussed.

However, the disadvantage of these water based bituminous glues is that when they have to be applied to non-porous (vapour-tight) supports, such as for instance a metal, or in case two vapour-tight materials, such as among others insulating materials, watertight membranes, etc. have to be glued, it will be impossible to evacuate the water, causing blisters to be formed on the vapour-tight materials which are glued together.

Furthermore, water based bituminous glues have the following disadvantages:
- in case of a sudden rain shower, they may be flushed away thus causing much damage to among others house fronts, drains, gullies, etc.;
- it will be impossible to use them at temperatures below 8°C and they are sensitive to frost. Therefore, such water based bituminous glues are difficult to work with or to be transported between the months of October and April. Moreover they have to be stored in frost-free spaces and it will be impossible for the user of the bitumen to leave them on the working site overnight;
- a second component has to be added to the water based bituminous glue in order to bind the water being caught between the two vapour-tight layers. Even then the danger of blisters to be formed will remain, as it will be impossible for that part of the water that is not bound to escape. Moreover, a two component glue is more expensive both to provide and to use, as skilled personnel will be required knowing the right proportion, the right way and the right materials to mix such a glue.

In EP 0 037 136 a bituminous composition is described which is free from water and which may be free from solvents. This plastic bituminous composition comprises:
a) 100 - 30 % by weight of a mixture consisting of:
   (1) 45 - 99,8 % by weight of a bituminous component, having a penetration of less than 800 (0,1 mm), measured at a temperature of 25°C;
   (2) 0,1 - 30 % by weight of a lithium salt of a C 10-C40 (hydroxy) fatty acid, and
   (3) 0,1 - 25 % by weight of an elastomer and
b) 0 - 70 % by weight of a filler.

According to the patentee, this composition has good self-adhesive properties, even when applied to wet or moistened supports. They may be used for cold applications and are stable with respect to shearing forces.

However, such a composition with a high percentage of bitumen is not workable under normal conditions. In order to make such a glue workable, it should either be heated or solvents have to be added. However, such a composition containing a high percentage of lithium salts of a fatty acid is to the contrary workable, but it is then very sensitive to temperatures.

In CA 2 025 442, a stabilizing system for ethylene vinyl acetate copolymers (EVA copolymers) and hot melts based upon them is described. The stabilizing system comprises one or more fatty acid amides in an amount of from about 1 to about 10 parts per 100 parts of EVA copolymer and/or an epoxidized soya oil in an amount of from about 1 to about 15 parts per 100 parts of EVA copolymer. The stabilizing system inhibits the decomposition of the EVA copolymer which decomposition includes the generation of acetic acid. The disadvantage of this system however is that it is used in hot applications, and not in cold applications, having the same disadvantages as the hot applications as described above.

In EP 0627480, an organophilic clay thickener for natural oil systems comprising the reaction product of a smectite-type clay and an organic cation in an amount of from about 75% to about 150% of the cation exchange capacity of the smectite-type clay. Said organophilic clay comprising at least one naturally occurring, resulting in increased efficiency as a thickener in natural oil systems. The disadvantage of this thickener is that it not suitable to intervene in a cold glue.

In EP 0 253 453, a drivable cover layer for a flat roof or the like is described, comprising an insulating layer and/or a water-tight layer and a drivable top layer positioned there above, existing of a sheet-like upper layer and an elastic lower layer connected to said upper layer along its entire surface and being supported by the insulating layer and/or water-tight layer. The top layer is connected to the insulating layer by means of an adhesive, which can be a cold adhesive. However, no further information is given about the cold adhesive.

The purpose of the invention is to provide a glue for the cold gluing of construction materials, the glue being free from water and comprises a minimum of solvents, but nevertheless it will have the following properties:
- less sensitive to temperature;
- high resistance to vapour diffusion;
- sufficient adhesive strength;
- immediately water repellent (such that the material is not washed away by the rain);
- easily to apply with little manpower, however with a sufficient firmness (by firmness is meant that the glue will not flow down along an inclined surface and that the materials being glued will not float away);
- to be applied safely by unskilled personnel
- to be applied in full gluing;
- after applying the glue to the surfaces to be glued, it will still be possible to shift the surfaces with respect to one another;
- economically advantageous;
- to be stored and transported safely and easily.

The purpose of the invention is attained by providing a glue for cold gluing of construction materials, the glue comprising one or several thixotropic oils.

In this manner, a glue is obtained having the properties mentioned above.

In a preferred embodiment of the glue according to the invention, the glue comprises between 40 and 75 %, preferably between 42 and 70 % and more preferably between 55 and 68 % thixotropic oils, with respect to the total glue composition.

In a more preferred embodiment of a glue according to the invention, the thixotropic oil is a combination of a polymerized oil made thixotropic by means of an ethyl-vinyl-acetate copolymeric resin (EVA), a microcrystalline wax or a polyethylene wax having a high melting point, and a non-polymerized oil, that has been made thixotropic by means of oil-absorbing fillers.

In a still more preferred embodiment of a glue according to the invention, the thixotropic oil is composed of 1 - 60 % polymerized oil with EVA and 1 - 60 % non-polymerized oil with oil-absorbing fillers with respect to the total composition of the glue.

Preferably, the oil-absorbing fillers are Ca-containing fillers.

In an advantageous embodiment of a glue, according to the invention, the thixotropic oil is a natural thixotropic oil.

Preferably the natural oils are consisting of linseed oil and/or soybean oil and/or castor oil and/or tung oil.

In a preferred embodiment of a glue according to the invention, the thixotropic oil is composed of:
(1) between 1 and 60 % polymerized oil with EVA with respect to the total composition of the glue, consisting of:
   (a) between 50 and 99 % polymerized linseed oil; and
   (b) between 1 and 50 % elvax^{®};
(2) between 1 and 60 % non-polymerized oil with oil-absorbing fillers with respect to the total composition of the glue, consisting of:
   (a) between 20 and 80 % chalk; and
   (b) between 20 and 80 % non-polymerized linseed oil.

In a more preferred embodiment of a glue according to the invention, the thixotropic oil is composed of:
(1) between 2 and 25 % polymerized oil with EVA with respect to the total composition of the glue, consisting of:
   (a) between 70 and 90 % polymerized linseed oil; and
   (b) between 10 and 30 % elvax^{®},
(2) between 40 and 60 % non-polymerized oil with oil-absorbing fillers with respect to the total composition of the glue, consisting of:
   (a) between 60 and 80 % chalk; and
   (b) between 20 and 40 % non-polymerized linseed oil.

In a still more preferred embodiment of a glue according to the invention, the thixotropic oil is composed of
(1) between 2 and 8 % polymerized oil with EVA with respect to the total composition of the glue, consisting of:
   (a) between 78 and 90 % polymerized linseed oil; and
   (b) between 10 and 22 % elvax^{®};
(2) between 40 and 60 % non-polymerized oil with oil-absorbing fillers with respect to the total composition of the glue, consisting of
   (a) between 70 and 80 % chalk; and
   (b) between 20 and 30 % non-polymerized linseed oiL

In an advantageous embodiment of a glue according to the invention, the glue comprises between 1,1 and 33 % additional adhesives, with a minimum melting temperature of 80°C and not exceeding the decomposition temperature of the oils used, preferably consisting of not more than 29 % bitumen, and of between 1 and 4 % SB (styrene-butadiene), poly-1,3-butadiene, copolymers of 1,3-butadiene with other monomers, such as styrene, methyl methacrylate, ethylene/propylene/diene terpolymers and/or halogen containing rubbers, such as bromobutyl, chloroprene rubbers, C₃-C₂₄ aromatically modified hydrocarbons, with respect to the total composition of the glue.

In an more advantageous embodiment of a glue according to the invention, the glue comprises between 5 and 22,5% additional adhesives, with a minimum melting temperature of 80°C and not exceeding the decomposition temperature of the oils used, preferably consisting of 5 to 20 % bitumen and of between 1 and 2,5 % SB, poly-1,3-butadiene, copolymers of 1,3-butadiene with other monomers, such as styrene, methyl methacrylate, ethylene/propylene/diene terpolymers and/or halogen containing rubbers, such as bromobutyl, chloroprene rubbers, C₃-C₂₄ aliphatic hydrocarbons, and aromatically modified hydrocarbons, with respect to the total composition of the glue.

In a still more advantageous embodiment of a glue according to the invention, the glue comprises between 7 and 18,5 % additional adhesives, with a minimum melting temperature of 80°C and not exceeding the decomposition temperature of the oils used, preferably consisting of 6 to 16 % bitumen and of between 1 and 2,5 % SB, poly-1,3-butadiene, copolymers of 1,3-butadiene with other monomers, such as styrene, methyl methacrylate, ethylene/propylene/diene terpolymers and/or halogen containing rubbers, such as bromobutyl, chloroprene rubbers, C₃-C₂₄ aliphatic hydrocarbons, and C₃-C₂₄ aromatically modified hydrocarbons, with respect to the total composition of the glue. In order to add mass and volume to the glue, the glue according to the invention comprises preferably between 1 and 20 % and more preferably between 4 and 18 % non-oil-absorbing fillers with respect to the global composition of the glue.

In a preferred embodiment of a glue according to the invention, the glue comprises not more than 5% and preferably not more than 2,5% pigments, with respect to the total composition of the glue.

On the one hand, the pigments can consist of black, red, green or ochre iron oxide. On the other hand, the pigments can consist of aluminium flakes.

In a preferred glue according to the invention, the fillers and/or the pigments preferably have a grain size preferably of between 5 and 2000 µm, and preferably of between 10 and 50 µm.

Depending on the field of application, the glue according to the invention may comprise not more than 15%, preferably not more than 10% and more preferably not more than 5% solvents with respect to the total composition of the glue.

Preferably, the solvents are aromatic, non-aromatic solvents and/or solvents free from VOC.

In order to obtain an increased elasticity, a preferred embodiment of a glue according to the invention comprises, with respect to the total composition of the glue, between 1 and 4 % and preferably between 1 and 2,5 % additional elastomers with a melting point of at least 80°C not exceeding the decomposition temperature of the oils used.

The use of the various polymers may depend on the required properties of the glue.

Preferably, the additional elastomers consist of styrene-butadiene-styrene (SBS), ethylene/glycedil/acrylate (EGA) and/or atactic polypropylene (APP).

For gluing insulating panels, use can be made of a glue which is entirely free from solvents. Preferably, such a glue comprises not more than 15%, preferably not more than 10% and more preferably not more than 5% reactive with respect to the total composition of the glue, this in order to obtain a better fluidity. Preferably, this reactive thinner will consist of crude and/or polymerized oil. This oil may also act as a softener of possible hard polymers or resins used as an adhesive, because of which the degree of flexibility may be maintained.

In order to obtain an additional firmness of the glue according to the invention, the glue comprises not more than 3% reinforcing fibres with respect to the total composition of the glue.

Preferably, the reinforcing fibres therewith consist of cellulose fibres glass fibres and/or polyethylene fibres.

Preferably, the glue according to the invention is applied to roofing materials.

In the following detailed description and in the examples, the characteristics and advantages of the glue according to the invention mentioned above will be further clarified. The only purpose of these examples and the accompanying description is to clarify the general principles of the present invention, so that no part of this description may be considered to be a restriction of the field of application of the invention or of the patent rights demanded for in the claims.

The glue according to the invention comprises one or several thixotropic oils, preferably between 40 and 75 %, more preferably between 42 and 70 % and still more preferably between 55 and 68 % with respect to the total composition of the glue.

Thixotropy occurs when a structure may be systematically disintegrated by a flow in a reversible manner and may be recomposed again when the flow stops. So, thixotropy will determine the physical properties of the glue. Consequently, such a glue becomes liquid by a vertical motion and then may be easily poured out and distributed. The quick initial adhesion is made possible by the increasing viscosity after the motion has stopped.

As already mentioned above, with conventional thixotropic glues, the various raw materials are dissolved by means of solvents or water, because of which they will lose their own characteristics. With the thixotropic glue according to the invention this is not the case. With such a glue, the molecules remain linked together as long as there will be no motion of the glue, because of which, the glue has the form of a mastic. However, by making the glue to move, the molecules will become more loosely linked together and a liquid glue is obtained.

Moreover, with a glue according to the invention, because of its molecular structure, an elastic chain will be formed, causing the glue to develop aliostatic properties. An aliostatic property is a property where there is an electric attraction between the particles of the glue.

Preferably, one or several natural oils are used as oils. The natural oils may consist of linseed oil and/or soybean oil and or castor oil and/or tung oil, etc.

Preferably, the thixotropic oil is a combination of polymerized oil being made thixotropic by means of an ethyl-vinyl-acetate copolymer resin (EVA), and a non-polymerized oil being made thixotropic by means of oil-absorbing fillers. EVA is a plastomer (or a thermoplastic polymer), which is a polymer, losing its mechanical properties when the temperature is rising above the melting temperature or the glazing temperature and which will recover its properties when cooled down again. This cycle of temperatures may be repeated several times.

In order to obtain a polymerized oil, the oil is heated to polymerization temperature. The polymerization temperature of linseed oil, for instance, will start from 145°C. In order to make the polymerized oil to become thixotropic by means of EVA, the EVA is added, causing a gel-like mixture to be formed. An example of an EVA is Elvax manufactured by DuPont.

It is also possible to replace the ethylene-vinyl acetate copolymer resin (EVA) by other similar polymers obtaining a similar result.

Another possibility is to combine or to replace the EVA by waxes. By making use of microcrystalline waxes, such as, for instance, SHELL HMP, having the property that they are easily to melt, good properties are obtained with respect to the workability, but as far as the properties with respect to adhesion and electricity are concerned, there is such a strong negative influence that a large amount of EVA is required to compensate them. Better results are obtained by using polyethylene wax, such as, for instance, Eastman epolene C10. Its properties are excellent and combined with EVA, depending on the ethylene content thereof, this product will still considerably increase the flexibility.

Preferably, the oil-absorbing fillers are Ca-containing fillers, such as for instance chalk.

In a preferred embodiment of a glue according to the invention, the thixotropic oil is composed of:
(1) between 1 and 60 % polymerized oil with EVA with respect to the total composition of the glue, consisting of:
   (a) between 50 and 99 % polymerized linseed oil; and
   (b) between 1 and 50 % elvax;
(2) between 1 and 60 % non-polymerized oil with oil-absorbing fillers with respect to the total composition of the glue, consisting of:
   (a) between 20 and 80 % chalk; and
   (b) between 20 and 80 % non-polymerized linseed oil.

In a more preferred embodiment of a glue according to the invention, the thixotropic oil is composed of
(1) between 2 and 25 % polymerized oil with EVA with respect to the total composition of the glue, consisting of:
   (a) between 70 and 90 % polymerized linseed oil; and
   (b) between 10 and 30 % elvax;
(2) between 40 and 60 % non-polymerized oil with oil-absorbing fillers with respect to the total composition of the glue, consisting of:
   (a) between 60 and 80 % chalk; and
   (b) between 20 and 40 % non-polymerized linseed oil.

In a still more preferred embodiment of a glue according to the invention, the thixotropic oil is composed of:
(1) between 2 and 8 % polymerized oil with EVA with respect to the total composition of the glue, consisting of:
   (a) between 78 and 90 % polymerized linseed oil; and
   (b) between 10 and 22 % elvax;
(2) between 40 and 60 % non-polymerized oil with oil-absorbing fillers with respect to the total composition of the glue, consisting of:
   (a) between 70 and 80 % chalk; and
   (b) between 20 and 30 % non-polymerized linseed oil.

In order to add mass and volume to the glue, the glue according to the invention comprises preferably between 1 and 20 % and more preferably between 4 and 18 % non-oil-absorbing fillers with respect to the total composition of the glue.

Moreover, the glue may comprise not more than 5 %, and preferably not more than 2,5 % pigments with respect to the total composition of the glue. These may have both an aesthetic and a technical function. If the glue may be visible in some places, it will be possible to adapt it to the colour of the surface to be glued, so that the whole may have an aesthetically sound aspect. If the formula used is containing a considerable amount of bitumen and a light colour has to be obtained, then the bitumen should be of a synthetic nature (free of asphaltenes). The pigments may also have an advantage with respect to the resistance to ultraviolet rays. When use is made of a number of rubbers, for instance, styrene-butadiene blockpolymers, the flexibility may deteriorate under the influence of daylight. In order to remedy this problem the use of pigments with a laminar structure, such as, for instance, iron oxide, black, red, green or ochre and aluminium flakes may have the function of a filter of ultraviolet rays, and will be able to increase the life span of the glue in sensitive places (joints). An example of black iron oxide is Bayer beyferrox 316/318.

The fillers and/or the pigments, preferably have a grain size situated between 5 and 2000 µm and more preferably between 10 and 50 µm.

In order to obtain a glue according to the invention, having an increased adhesive force, a glue will be containing, with respect to the total composition of the glue, between 1,1 and 33 % additional adhesives with a minimum melting temperature of at least 80°C and not exceeding the decomposition temperature of the oil, preferable consisting of not more than 29 % bitumen en between 1 and 4 % SB (styrene-butadiene), poly-1,3 butadiene, copolymers of 1,3 butadiene with other monomers such as styrene, methyl methacrylate, ethylene/propylene/diene terpolymers, and/or halogen containing rubbers, such as bromobutyl, chloroprene robbers, C₁-C₂₄ aromatically modified hydrocarbons.

More preferably, with respect to the total composition of the glue, the glue according to the invention comprises between 5 and 22,5 % additional adhesives with a minimum melting temperature of 80°C and not exceeding the decomposition temperatures of the oils used, preferably consisting of between 5 and 20 % bitumen en between 1 and 2,5 % SB, poly-1,3 butadiene, copolymers of 1,3 butadiene with other monomers such as styrene, methyl methacrylate, ethylene/propylene/diene terpolymers, and/or halogen containing rubbers, such as bromobutyl, chloroprene rubbers, C₃-C₂₄ aliphatic hydrocarbons and C₃-C₂₄ aromatically modified hydrocarbons.

Still more preferably, with respect to the total composition of the glue, the glue according to the invention comprises between 7 and 18,5 % additional adhesives with a minimum melting temperature of 80°C and not exceeding the decomposition temperatures of the oils used, preferably consisting of between 6 and 16 % bitumen en between 1 and 2,5 % SB, poly-1,3 butadiene, copolymers of 1,3 butadiene with other monomers such as styrene, methyl methacrylate, ethylene/propylene/diene terpolymers, and/or halogen containing rubbers, such as bromobutyl, chloroprene rubbers, C₃-C₂₄ aliphatic hydrocarbons and C₃-C₂₄ aromatically modified hydrocarbons.

Bitumen is a complex composition of organic components of a high molecular weight, mainly consisting of hydrocarbons or derivatives of hydrocarbons. It is a highly viscous or sometimes a solid material. Natural bitumen is obtained by refining the residual flows of mineral oils, vegetal products or coal. As natural bitumen, penetration bitumen may be used, such as, for instance, 160/220 bitumen. The value of 160/220 is determined by means of a penetration test. The penetration is an essential property of the bitumen and is measured by the penetration depth caused by a needle having a weight of 100 grams penetrating the bitumen during a fixed period (a few seconds). For instance, bitumen 160/220 will cause a penetration of the needle situated between 16 and 22 mm during a penetration test. The larger the numbers, the softer or less viscous the bitumen will be. On the other hand, also oxidized bitumen may be used, such as for instance 85/25. The value of 85 is measured by means of the ring and ball test, which means that the bitumen will start to flow at temperature of 85°C. The value of 25 is measured by means of the penetration test. Oxidized bitumen is a bitumen that is unable to react any further.
Furthermore, there also exists synthetic bitumen, which is obtained as an extract by means of an extraction process with solvents.

In a preferred method to produce a glue according to the invention comprising bitumen, in a first stage, oil-absorbing fillers are mixed with oil up to the maximum saturation point of the oil, because of which a mastic is obtained. Furthermore, thixotropic bitumen is formed by adding polymerized and/or non-polymerized natural oils to the bitumen which will partly combine with the bitumen. The thixotropy is obtained by the part not combining with the bitumen. So, the bitumen molecules are not dissolved in the natural oils, but they are carried by these natural oils, because of which the bitumen will maintain its characteristics. This means that all its molecules are linked up together and each molecule will preserve its own identity, as long as no polymerization has occurred. With respect to the method mentioned above, it should be noted that there are still other methods to produce such a glue.

When using bitumen, it will be possible to vulcanize a number of rubbers of various kinds (natural rubbers, dienes) partly or entirely, by using the sulphur contained in the bitumen. If the aim is to obtain the same reaction in a composition of the glue containing only a small amount of bitumen or to increase it in a composition of the glue having a high content of bitumen, then accelerators may be added such as sulphur and/or peroxide

On the other hand it will be possible to use also Rosin resins as additional adhesives, such as Portuguese resin, colophony, etc.

The glue according to the invention is containing hardly any solvents, i.e. not more than 15 %, preferably not more than 10 % and more preferably not more than 5 % solvents with respect to the total composition of the glue.

Whether or not adding solvents is depending on the field of application in case of gluing organic or inorganic materials, such as insulating panels, PUR, PIR and extruded and expanded panels of polystyrene, the solvents are reduced to zero, because otherwise the solvents will begin to dissolve these materials. In order to yet improve the fluidity of the glue, it will be possible to make use of a reactive thinner in the form of a polymerized oil. This oil may likewise act as a softener when using possible hard polymers or resins, thus maintaining the flexibility at an acceptable level.

In order to obtain a better adhesion to some materials, such as bituminous membranes, membranes of synthetic material, etc., a low content of solvent is added in order to obtain a better adhesion by etching these materials. In this case, if it is allowed to do so, aromatic solvents may be used. Depending on the safety requirements, the rate of evaporation and the dissolving capacity, a choice may be made from white spirit, solvent naphtha, toluene, xylene, butyl acetate, lactones, etc., as long as they are combining well with bitumen. This will ensure that the membranes to be glued and the glue will finally end up as a whole. Another possibility to obtain these materials to be well glued is the use of a thinner free from VOC, such as for instance, alkyl esters (fatty acid esters). On the other hand, non-aromatic solvents may also be used.

If bituminous membranes or insulating panels are to be glued to a moist support, it will be possible to make use of a primer, free from water and poor in solvent, having properties that are nearly the same as those of the glue according to the invention, containing a thinner free from aromatics, having the property that it is able to combine with water. Another option is to ad this thinner to the composition used most, because of which only one operation is required. The solvents being taken into account for this application are, for instance, butyl acetate, methyl proxytol, methyl proxytol acetate, isopropyl alcohol, etc.

In order to improve the elasticity, the glue may comprise between 1 and 4 %, and preferably between 1 and 2,5 % additional elastomers. Elastomers are polymers which because of their elasticity are able to return almost entirely to their initial dimensions, after having been submitted to a load. Examples of elastomers are styrene-butadiene-styrene blockpolymer (SBS), ethylene/glycedil/acrylate (EGA) and/or atactic polypropylene (APP). SBS is a high-quality synthetic material that is elastic and very supple and pliable. Besides its elastic properties it has also thermoplastic properties. An important condition of these elastomers is that they have a melting temperature of minimum 80°C which moreover does not exceed the decomposition temperature of the oils used. The use of the different polymers may depend on the properties of the glue that are required.

Preferably, the glue according to the invention may comprise not more than 15 %, preferably not more than 10 % and still more preferably not more than 5 % of a reactive thinner, with respect to the total composition of the glue. Preferably, this reactive thinner is consisting of crude and/or polymerized oil.

In order to obtain an additional firmness, the glue according to the invention may comprise not more than 3 % reinforcing fibres, with respect to the total composition of the glue. These fibres may consist of cellulose fibres, polyethylene fibres, glass fibres, etc.

The glue according to the invention is mainly applied for the cold-gluing of construction materials used as roofing materials.

### Example 1

Table 1, is representing an example of the glue according to the invention most commonly used:

**Table 1 : example of the most commonly used composition of a glue for cold-gluing construction materials**

| Ingredient | Percentage with respect to the total composition of the glue | | | | |
|---|---|---|---|---|---|
| | | | | | |
| **thixotropic oil** | | | | | 55 - 68 % |
| polymerized oil with EVA | | | | 2 - 8 % | |
| composition | | polymerized linseed oil | 78 - 90 % | | |
| | | elvax (EVA) | 10 - 22 % | | |
| non-polymerized oil with oil-absorbing fillers | | | | 40 - 60 % | |
| composition | | chalk (oil-absorbing filler) | 70 - 80 % | | |
| | | non-polymerized linseed oil | 20 - 30 % | | |
| **non-oil absorbing fillers** | | | | | |
| slaty marl (ardoise) | | | | | 6 - 14 % |
| **additional elastomers** | | | | | |
| SBS | | | | | 1 - 2,5 % |
| **additional adhesives** | | | | | |
| bitumen + artificial resins | | | | | 7 - 18,5 % |
| Composition | | bitumen | 6 - 16 % | | |
| | | SB | 1 - 2,5 % | | |
| **solvents** | | | | | |
| aromatic solvents | | | | | 0,1 - 5 % |
| **reactive thinner** | | | | | |
| crude linseed oil | | | | | 0,1 - 5 % |
| **pigments** | | | | | |
| black iron oxide | | | | | 0,1 - 2,5 % |
| **reinforcing fibres** | | | | | |
| cellulose fibres | | | | | 0,1 - 2 % |

### Example 2

As already mentioned above, for gluing insulation panels, use can be made of a composition entirely free of solvents, an example of which is given in table 2.

**Table 2 : example of a composition free of solvent of a glue for cold-gluing insulation panels**

| Ingredient | Percentage with respect to the total composition of the glue | | | | |
|---|---|---|---|---|---|
| | | | | | |
| **thixotropic oil** | | | | | 42 - 68 % |
| polymerized oil with EVA | | | | 2 - 8 % | |
| composition | | polymerized linseed oil | 78 - 90 % | | |
| | | elvax (EVA) | 10 - 22 % | | |
| non-polymerized oil with oil-absorbing fillers | | | | 40 - 60 % | |
| composition | | chalk (oil-absorbing filler) | 70 - 80 % | | |
| | | non-polymerized linseed oil | 20 - 30 % | | |
| **non-oil absorbing fillers** | | | | | |
| slaty marl (ardoise) | | | | | 6 - 14 % |
| **additional elastomers** | | | | | |
| SBS | | | | | 1 - 2,5 % |
| **additional adhesives** | | | | | |
| bitumen + artificial resins | | | | | 7 - 18,5 % |
| composition | | bitumen | 6 - 16 % | | |
| | | SB | 1 - 2,5 % | | |
| **reactive thinner** | | | | | |
| crude linseed oil | | | | | 5- 15 % |
| **pigments** | | | | | |
| black iron oxide | | | | | 0,1 - 2,5 % |
| **reinforcing fibres** | | | | | |
| cellulose fibres | | | | | 0,1 - 2 % |

It should be noted that an alcohol, such as ethanol, methanol, etc. may be used as a reaction catalyst, in a percentage of not more than 0,55% with respect to the total composition of the glue. However, in the final composition, the alcohol has been almost entirely evaporated, and there only remains a percentage of 0,1% with respect to the total composition of the glue, because of which the composition may be considered to be free of solvents.

### Example 3

As already mentioned above, aromatic solvents, if accepted, may be used for gluing bituminous membranes. In table 3 an example of such a composition is given.

**Table 3 : example of a composition of a glue with aromatic solvents for the cold-gluing of bituminous membranes**

| Ingredient | Percentage with respect to the total composition of the glue | | | | |
|---|---|---|---|---|---|
| | | | | | |
| **thixotropic oil** | | | | | 42 - 68 % |
| polymerized oil with EVA | | | | 2 - 8 % | |
| composition | | polymerized linseed oil | 78 - 90 % | | |
| | | elvax (EVA) | 10 - 22 % | | |
| non-polymerized oil with oil-absorbing fillers | | | | 40 - 60 % | |
| composition | | chalk (oil-absorbing filler) | 70 - 80 % | | |
| | | non-polymerized linseed oil | 20 - 30 % | | |
| **non-oil absorbing fillers** | | | | | |
| slaty marl (ardoise) | | | | | 6 - 14 % |
| **additional elastomers** | | | | | |
| SBS or atactic polypropylene | | | | | 1 - 2,5 % |
| **additional adhesives** | | | | | |
| bitumen + artificial resins | | | | | 7 - 18,5 % |
| composition | | bitumen | 6 - 16 % | | |
| | | SB | 1 - 2,5 % | | |
| **solvents** | | | | | |
| heavy solvent nafta | | | | | 0,1 - 15 % |
| **reactive thinner** | | | | | |
| crude linseed oil | | | | | 0,1 - 0,5 % |
| **pigments** | | | | | |
| black iron oxide | | | | | 0,1 - 2,5 % |
| **reinforcing fibres** | | | | | |
| cellulose fibres | | | | | 0,1 - 2 % |

In table 4, however, an example is given of a composition poor in solvent to glue bituminous membranes.

**Table 4 : example of a composition of a glue poor in solvent for cold-gluing of bituminous membranes**

| Ingredient | Percentage with respect to the total composition of the glue | | | | |
|---|---|---|---|---|---|
| | | | | | |
| **thixotropic oil** | | | | | 42 - 68 % |
| polymerized oil with EVA | | | | 2 - 8 % | |
| composition | | polymerized linseed oil | 78 - 90 % | | |
| | | elvax (EVA) | 10 - 22 % | | |
| non-polymerized oil with oil-absorbing fillers | | | | 40 - 60 % | |
| composition | | chalk (oil-absorbing filler) | 70 - 80 % | | |
| | | non-polymerized linseed oil | 20 - 30 % | | |
| **non-oil absorbing fillers** | | | | | |
| slaty marl (ardoise) | | | | | 6 - 14 % |
| **additional elastomers** | | | | | |
| SBS or atactic polypropylene | | | | | 1 - 2,5 % |
| **additional adhesives** | | | | | |
| bitumen + artificial resins | | | | | 7 - 18,5 % |
| composition | | bitumen | 6 - 16 % | | |
| | | SB | 1 - 2,5 % | | |
| **solvents** | | | | | |
| heavy solvent nafta | | | | | 0,1 - 15 % |
| **reactive thinner** | | | | | |
| crude linseed oil | | | | | 0,1 - 0,5 % |
| **pigments** | | | | | |
| black iron oxide | | | | | 0,1 - 2,5 % |
| **reinforcing fibres** | | | | | |
| cellulose fibres | | | | | 0,1 - 2 % |

### Example 4

When construction materials should be glued to a moist support, then solvents binding water are added to the glue according to the invention, as represented in table 5.

**Table 5: example of a composition of a glue for cold-gluing construction materials to a moist support**

| Ingredient | Percentage with respect to the total composition of the glue | | | | |
|---|---|---|---|---|---|
| | | | | | |
| **thixotropic oil** | | | | | 42 - 68 % |
| polymerized oil with EVA | | | | 2 - 8 % | |
| composition | | polymerized linseed oil | 78 - 90 % | | |
| | | elvax (EVA) | 10 - 22 % | | |
| non-polymerized oil with oil-absorbing fillers | | | | 40 - 60 % | |
| composition | | chalk (oil-absorbing filler) | 70 - 80 % | | |
| | | non-polymerized linseed oil | 20 - 30 % | | |
| **non-oil absorbing fillers** | | | | | |
| slaty marl (ardoise) | | | | | 6 - 14 % |
| **additional elastomers** | | | | | |
| SBS | | | | | 1 - 2,5 % |
| **additional adhesives** | | | | | |
| bitumen + artificial resins | | | | | 7 - 18,5 % |
| composition | | bitumen | 6 - 16 % | | |
| | | SB | 1 - 2,5 % | | |
| **solvents** | | | | | |
| butyl acetate | | | | | 0,1 - 10 % |
| **reactive thinner** | | | | | |
| crude linseed oil | | | | | 0,1 - 5 % |
| **pigments** | | | | | |
| black iron oxide | | | | | 0,1 - 2,5 % |
| **reinforcing fibres** | | | | | |
| cellulose fibres | | | | | 0,1 - 2 % |

When construction materials should be glued to a moist support, then a primer free of solvents may be used, as represented in table 6.

**Table 6 : example of a composition of a primer free of aromatics poor in solvent to apply to a moist support**

| Ingredient | Percentage with respect to the total composition of the glue | | | | |
|---|---|---|---|---|---|
| | | | | | |
| **thixotropic oil** | | | | | 60 - 75 % |
| polymerized oil with EVA | | | | 40 - 60 % | |
| composition | | polymerized linseed oil | 78 - 90 % | | |
| | | elvax (EVA) | 10 - 22 % | | |
| non-polymerized oil with oil-absorbing fillers | | | | 10 - 15 % | |
| composition | | chalk (oil-absorbing filler) | 20 - 30 % | | |
| | | non-polymerized linseed oil | 70 - 80 % | | |
| **non-oil absorbing fillers** | | | | | |
| slaty marl (ardoise) | | | | | 1 - 5 % |
| **additional elastomers** | | | | | |
| SBS | | | | | 1 - 1,5 % |
| **additional adhesives** | | | | | |
| bitumen + artificial resins | | | | | 21 - 30,5 % |
| composition | | bitumen | 20 - 29 % | | |
| | | SB | 1-1,5% | | |
| **solvents** | | | | | |
| butyl acetate 1/1 mixed with 4-butyrollacton, dihydro-2(3H)-furanon | | | | | 0,1 - 4 % |
| **reactive thinner** | | | | | |
| crude linseed oil | | | | | 5,1 - 15 % |
| **pigments** | | | | | |
| black iron oxide | | | | | 0,1 - 0,5 % |
| **reinforcing fibres** | | | | | |
| cellulose fibres | | | | | 0,1 - 2 % |

As in practice, on a building site, often a number of different supports, circumstances and materials to be glued will occur, the preceding examples may be mutually combined in order to obtain the ideal glue for the building site concerned and to enable the workmen to find the right glue for the various materials to be glued, thus avoiding any organizational confusion, as mistakes may easily occur when using different glues and the wrong glue may be applied to the wrong supports.

### Comparative Reeling-off and tensile tests on the machine for testing the tensile strength

In these comparative tests, by means of a peeling-off test (see table 7) and a tensile test (see table 8), the glue according to the invention and in accordance with the composition shown in table 1 (glue D), is compared to three commonly used bituminous glues on the market (the glues A, B and C) for gluing bituminous membranes, when applying them to one bituminous support and two bituminous covering layers.

In the peeling-off test, strips of 5 cm² of the upper and the lower layer are placed one upon the other and the central parts are glued together by means of the glue to be tested. The parts not glued together are torn apart at an angle of 180°.

In the tensile test strips of 5 cm² of the upper and the lower layer are placed partly one upon the other and the overlapping ends are glued together by means of the glue to be tested. The two layers are torn apart lengthwise.

In the tables 7 and 8:
- glue A is an oxidized bitumen based with a solvent content of 45 %;
- glue B is an oxidized bitumen based glue with flux oil and a solvent content of 42 %;
- glue C is a glue based on a sbs modified penetrating bitumen and a solvent content of 41 %.
- membrane X is a bituminous lower layer with bitumen primer;
- membrane Y is a bituminous upper layer a burning away foil leaving 50% of the membrane uncovered;
- membrane Z is a bituminous upper layer specifically developed for cold gluing.

**Table 7: comparative peeling-off test**

| Peeling-off test (expressed in N/5 cm) | | | | |
|---|---|---|---|---|
| | glue A | glue B | glue C | glue D |
| | After 1 day | | | |
| X + Y | 6,6 | 5,7 | 1,3 | 1,4 |
| X + Z | 10,5 | 9,4 | 2,1 | 2,6 |

| | After 1 week | | | |
|---|---|---|---|---|
| X + Y | 41,4 | 25,9 | 2,9 | 2,6 |
| X + Z | 41,3 | 31,7 | 3,6 | 3,2 |

| | After 2 months | | | |
|---|---|---|---|---|
| X + Y | 68,8 | 64,9 | 7,0 | 13,28 |
| X + Z | 37,7 | 41,0 | 9,7 | 15,4 |

| | After 1 month + 1 month 70 °C | | | |
|---|---|---|---|---|
| X + Y | 4,5 | 7,4 | 20,1 | 44,78 |
| X + Z | 22,2 | 24,2 | 11,0 | 19,62 |

**Table 8: comparative tensile test**

| Tensile test (expressed in N/5 cm) | | | | |
|---|---|---|---|---|
| | glue A | glue B | glue C | glue D |
| | After 1 day | | | |
| X + Y | 217 | 220,9 | 27,1 | 26,1 |
| X + Z | 287 | 270,0 | 61,1 | 71,8 |

| | After 1 week | | | |
|---|---|---|---|---|
| X+Y | 339,1 | 445,7 | 115,1 | 128,9 |
| X + Z | 489,1 | 451,6 | 234,9 | 170,5 |

| | After 2 months | | | |
|---|---|---|---|---|
| X+Y | 427,0 | 440,5 | 320,0 | 646,3 |
| X + Z | 452,4 | 447,6 | 364,2 | 436 |

| | After 1 month + 1 month 70°C | | | |
|---|---|---|---|---|
| X + Y | 476,2 | 480,1 | 484,7 | 483,1 |
| X + Z | 179,2 | 459,9 | 567,9 | 525 |

### Conclusion

The peeling-off test and the tensile test are showing that the higher the value expressed in N/5 cm, the stronger the product is.

When comparing the maximum tensile force between the various glues A, B, C and D, expressed in N/5 cm resulting from the peeling-off test and the tensile test, it will be noted that, notwithstanding which combination of membranes (X + Y or X + Z) is considered, the glues A and B based on the oxidized bitumen, have the quickest initial adhesion (conditioning after 1 day) and that the results of the SBS modified glue (glue C) and the glue according to the invention (glue D) are showing similar results.

The results of the glues A and B remain better than the results of the glues C and D until the conditioning of 2 months at room temperature included in the test. From the moment we apply an artificial ageing (1 month at room temperature + 1 month at 70°C) we see that the results of glue A and B are decreasing spectacularly and that there is still an increase of the tensile strength both with glue C and with the glue according to the invention (glue D).

We will likewise ascertain that the results are different, most of all, in the peeling-off test. With this test, we find that the results of the glues A and B are strongly decreasing because of the brittleness of the glue. With glue C, in this test, there is still an increase of tensile strength, but the best results in test are found again in the values for the glue according to the invention (glue D).

An additional conclusion is that the glue according to the invention (glue D) gives better long term results, compared with the other glues (the glues A, B and C), on membranes which, in fact, are not meant for cold gluing. Consequently, the glue according to the invention may be perfectly applied to such membranes, under the condition that a perforated burning away foil is applied, leaving 50 % of the membrane uncovered.

## Claims

1. Glue for the cold gluing of construction materials, **characterized in that** the glue comprises one or several thixotropic oils.

2. Glue according to claim 1, **characterized in that** the glue comprises between 40 and 75 %, preferably between 42 and 70 % and more preferably between 55 and 68 % thixotropic oils, with respect to the total composition of the glue.

3. Glue according to claim 1 or 2, **characterized in that** the thixotropic oil is a combination of a polymerized oil being made thixotropic by means of an ethyl-vinyl acetate copolymer resin (EVA), a microcrystalline wax or a polyethylene wax with a high melting point, and a non-polymerized oil, being made thixotropic by means of oil-absorbing fillers.

4. Glue according to claim 3, **characterized in that** the thixotropic oil is composed of between 1 and 60 % polymerized oil with EVA, and of between 1 and 60 % non-polymerized oil with oil-absorbing fillers, with respect to the total composition of the glue.

5. Glue according to claim 3 or 4, **characterized in that** the oil-absorbing fillers are Ca-containing fillers.

6. Glue according to any one of the preceding claims 1 up to and including 5, **characterized in that** the thixotropic oil is a natural thixotropic oil.

7. Glue according to claim 6, **characterized in that** the natural oils are consisting of linseed oil and/or soybean oil and/or castor oil and/or tung oil.

8. Glue according to any one of the preceding claims 3 up to and including 7, **characterized in that** the thixotropic oil is composed of
(1) between 1 and 60 % polymerized oil with EVA with respect to the total composition of the glue, consisting of
(a) between 50 and 99 % polymerized linseed oil; and
(b) between 1 and 50 % elvax®;
(2) between 1 and 60 % non-polymerized oil with oil-absorbing fillers with respect to the global composition of the glue, consisting of
(a) between 20 and 80 % chalk; and
(b) between 20 and 80 % non-polymerized linseed oil.

9. Glue according to claim 8, **characterized in that** the thixotropic oil is composed of
(1) between 2 and 25 % polymerized oil with EVA with respect to the total composition of the glue, consisting of
(a) between 70 and 90 % polymerized linseed oil; and
(b) between 10 and 30 % elvax®;
(2) between 40 and 60 % non-polymerized oil with oil-absorbing fillers with respect to the global composition of the glue, consisting of:
(a) between 60 and 80 % chalk; and
(b) between 20 and 40 % non-polymerized linseed oil.

10. Glue according to claim 9, **characterized in that** the thixotropic oil is composed of
(1) between 2 and 8 % polymerized oil with EVA with respect to the total composition of the glue, consisting of
(a) between 78 and 90 % polymerized linseed oil; and
(b) between 10 and 22 % elvax®;
(2) between 40 and 60 % non-polymerized oil with oil-absorbing fillers with respect to the total composition of the glue, consisting of
(a) between 70 and 80 % chalk; and .
(b) between 20 and 30 % non-polymerized linseed oil.

11. Glue according to any one of the preceding claims 1 up to and including 10, **characterized in that** the glue comprises between 1,1 and 33 % additional adhesives with a minimum melting temperature of 80°C and not exceeding the decomposition temperature of the oils used preferably consisting of not more than 29 % bitumen and between 1 and 4 % SB (styrene-butadiene), poly-1,3 butadiene, copolymers of 1,3 butadiene with other monomers such as styrene, methyl methacrylate, ethylene/propylene/diene terpolymers, and/or halogen containing rubbers, such as bromobutyl, chloroprene rubbers, C₃-C₂₄ aromatically modified hydrocarbons, with respect to the total composition of the glue.

12. Glue according to claim 11, **characterized in that** the glue comprises between 5 and 22,5 % additional adhesives with a minimum melting temperature of 80°C and not exceeding the decomposition temperature of the oils used, preferably consisting of between 5 and 20 % bitumen en between 1 and 2,5 % SB, poly-1,3 butadiene, copolymers of 1,3 butadiene with other monomers such as styrene, methyl methacrylate, ethylene/propylene/diene terpolymers, and/or halogen containing rubbers, such as bromobutyl, chloroprene rubbers, C₃-C₂₄ aliphatic hydrocarbons and C₁-C₂₄ aromatically modified hydrocarbons, with respect to the total composition of the glue.

13. Glue according to claim 12, **characterized in that** the glue comprises between 7 and 18,5 % additional adhesives with a minimum melting temperature of 80°C and not exceeding the decomposition temperature of the oils used, preferably consisting of between 6 and 16 % bitumen en between 1 and 2,5 % SB, poly-1,3 butadiene, copolymers of 1,3 butadiene with other monomers such as styrene, methyl methacrylate, ethylene/propylene/diene terpolymers, and/or halogen containing rubbers, such as bromobutyl, chloroprene rubbers, C₃-C₂₄ aliphatic hydrocarbons and C₃-C₂₄ aromatically modified hydrocarbons, with respect to the total composition of the glue.

14. Glue according to any one of the preceding claims 1 up to and including 13, **characterized in that** the glue comprises between 1 % and 20 % and preferably between 4 and 18 % non-oil-absorbing fillers, with respect to the total composition of the glue.

15. Glue according to any one of the preceding claims 1 up to and including 14, **characterized in that** the glue comprises not more than 5 % and preferably not more than 2,5 % pigments, with respect to the total composition of the glue.

16. Glue according to claim 15, **characterized in that** the pigments consist of black, red, green or ochre iron oxide.

17. Glue according to claim 15, **characterized in that** the pigments consist of aluminium flakes.

18. Glue according to any one of the preceding claims 3 up to and including 17, **characterized in that** the fillers and/or the pigments have a grain size situated between 5 and 2000 µm and preferably between 10 and 50 µm.

19. Glue according to any one of the preceding claims 1 up to and including 18, **characterized in that** the glue comprises not more than 15%, preferably not more than 10 % and more preferably not more thant 5 % solvents, with respect to the total composition of the glue.

20. Glue according to claim 19, **characterized in that** the solvents are aromatic, non-aromatic solvents and/or solvents free from VOC.

21. Glue according to any one of the preceding claims 1 up to and including 20, **characterized in that** the glue comprises between 1 and 4 % and preferably between 1 and 2,5 % additional elastomers with a minimum melting temperature of 80°C and not exceeding the decomposition temperature of the oils used, with respect to the total composition of the glue.

22. Glue according to claim 20, **characterized in that** the additional elastomers are consisting of styrene-butadiene-styrene (SBS), ethylene/glycedil/acrylate (EGA) and/or atactic polypropylene (APP).

23. Glue according to any one of the preceding claims 1 up to and including 22, **characterized in that** the glue comprises not more than 15 %, preferably not more than 10 % and more preferably not more than 5 % of a reactive thinner, with respect to the total composition of the glue.

24. Glue according to claim 23, **characterized in that** the reactive thinner is consisting of crude and/or polymerized oil.

25. Glue according to any one of the preceding claims 1 up to and including 24, **characterized in that** the glue comprises not more than 3 % reinforcing fibres, with respect to the total composition of the glue.

26. Glue according to claim 25, **characterized in that** the reinforcing fibres are consisting of cellulose fibres, glass fibres and/or polyethylene fibres.

27. Glue according to any one of the preceding claims, **characterized in that** the glue is used for roofing materials.

## Patentansprüche

1. Klebstoff fiir die Kaltverklebung von Baustoffen, **dadurch gekennzeichnet, dass** der Klebstoff ein thixotropes Öl oder mehrere thixotrope Öle umfasst.

2. Klebstoff nach Anspruch 1, **dadurch gekennzeichnet, dass** er 40 bis 75%, vorzugsweise 42 bis 70 % und stärker bevorzugt 55 bis 68 % thixotrope Öle, bezogen auf die Gesamtzusammensetzung des Klebstoffs, umfasst.

3. Klebstoff nach Anspruch 1 oder 2, **dadurch gekennzeichnet, dass** es sich bei dem thixotropen Öl um eine Kombination aus einem polymerisierten Öl, das mittels eines Ethyl-Vinylacetat-Copolymer-Harzes (EVA), eines mikrokristallinen Wachses oder eines Polyethylenwachses mit hohem Schmelzpunkt thixotrop gemacht wurde, und einem unpolymerisierten Öl, das mittels eines ölabsorbierenden Füllstoffes thixotrop gemacht wurde, handelt.

4. Klebstoff nach Anspruch 3, **dadurch gekennzeichnet, dass** das thixotrope Öl zu 1 bis 60 % aus polymerisiertem Öl mit EVA und zu 1 bis 60 % aus unpolymerisiertem Öl mit ölabsorbierenden Füllstoffen, bezogen auf die Gesamtzusammensetzung des Klebstoffs, zusammengesetzt ist.

5. Klebstoff nach Anspruch 3 oder 4, **dadurch gekennzeichnet, dass** es sich bei den ölabsorbierenden Füllstoffen um Ca enthaltende Füllstoffe handelt.

6. Klebstoff nach einem der Ansprüche 1 bis 5, **dadurch gekennzeichnet, dass** es sich bei dem thixotropen Öl um ein natürliches thixotropes Öl handelt.

7. Klebstoff nach Anspruch 6, **dadurch gekennzeichnet, dass** die natürlichen Öle aus Leinsamenöl und/oder Sojabohnenöl und/oder Rizinusöl und/oder Tungöl bestehen.

8. Klebstoff nach einem der vorangehenden Ansprüche 3 bis 7, **dadurch gekennzeichnet, dass** das thixotrope Öl zusammengesetzt ist aus:
(1) 1 bis 60 % polymerisiertem Öl mit EVA, bezogen auf die Gesamtmenge des Klebstoffs, welches aus
(a) 50 bis 99 % polymerisiertem Leinsamenöl und
(b) 1 bis 50 % Elvax®
besteht;
(2) 1 bis 60 % unpolymerisiertem Öl mit ölabsorbierenden Füllstoffen, bezogen auf die Gesamtmenge des Klebstoffs, welches aus
(a) 20 bis 80 % Kreide und
(b) 20 bis 80 % unpolymerisiertem Leinsamenöl
besteht.

9. Klebstoff nach Anspruch 8, **dadurch gekennzeichnet, dass** das thixotrope Öl zusammengesetzt ist aus:
(1) 2 bis 25 % polymerisiertem Öl mit EVA, bezogen auf die Gesamtmenge des Klebstoffs, welches aus
(a) 70 bis 90 % polymerisiertem Leinsamenöl und
(b) 10 bis 30 % Elvax®
besteht;
(2) 40 bis 60 % unpolymerisiertem Öl mit ölabsorbierenden Füllstoffen, bezogen auf die Gesamtmenge des Klebstoffs, welches aus
(a) 60 bis 80 % Kreide und
(b) 20 bis 40 % unpolymerisiertem Leinsamenöl
besteht.

10. Klebstoff nach Anspruch 9, **dadurch gekennzeichnet, dass** das thixotrope Öl zusammengesetzt ist aus:
(1) 2 bis 8 % polymerisiertem Öl mit EVA, bezogen auf die Gesamtmenge des Klebstoffs, welches aus
(a) 78 bis 90 % polymerisiertem Leinsamenöl und
(b) 10 bis 22 % Elvax®
besteht;
(2) 40 bis 60 % unpolymerisiertem Öl mit ölabsorbierenden Füllstoffen, bezogen auf die Gesamtmenge des Klebstoffs, welches aus
(a) 70 bis 80 % Kreide und
(b) 20 bis 30 % unpolymerisiertem Leinsamenöl
besteht.

11. Klebstoff nach einem der vorangehenden Ansprüche 1 bis 10, **dadurch gekennzeichnet, dass** er 1,1 bis 33 % zusätzliche Klebstoffe mit einer Schmelztemperatur, die mindestens 80 °C beträgt und nicht über der Zersetzungstemperatur der verwendeten Öle liegt, vorzugsweise bestehend aus nicht mehr als 29 % Bitumen und von 1 bis 4 % SB (Styrolbutadien), Poly-1,3-butadien, Copolymeren von 1,3-Butadien mit anderen Monomeren wie Styrol, Methylmethacrylat, Ehylen-Propylen-Dien-Terpolymeren und/oder Halogen enthaltenden Kautschuken, wie Bromobutyl-, Chloropren-Kautschuken, aromatisch modifizierten C₃-C₂₄-Kohlenwasserstoffen, bezogen auf die Gesamtzusammensetzung des Klebstoffs, umfasst.

12. Klebstoff nach Anspruch 11, **dadurch gekennzeichnet, dass** er 5 bis 22,5 % zusätzliche Klebstoffe mit einer Schmelztemperatur, die mindestens 80 °C beträgt und nicht über der Zersetzungstemperatur der verwendeten Öle liegt, vorzugsweise bestehend aus 5 bis 20 % Bitumen und 1 bis 2,5 % SB, Poly-1,3-butadien, Copolymeren von 1,3-Butadien mit anderen Monomeren wie Styrol, Methylmethacrylat, Ehylen-Propylen-Dien-Terpolymeren und/oder Halogen enthaltenden Kautschuken, wie Bromobutyl-, Chloropren-Kautschuken, aliphatischen C₃-C₂₄-Kohlenwasserstoffen und aromatisch modifizierten C₃-C₂₄-Kohlenwasserstoffen, bezogen auf die Gesamtzusammensetzung des Klebstoffs, umfasst.

13. Klebstoff nach Anspruch 12, **dadurch gekennzeichnet, dass** er 7 bis 18,5 % zusätzliche Klebstoffe mit einer Schmelztemperatur, die mindestens 80 °C beträgt und nicht über der Zersetzungstemperatur der verwendeten Öle liegt, vorzugsweise bestehend aus 6 bis 16 % Bitumen und 1 bis 2,5 % SB, Poly-1,3-butadien, Copolymeren von 1,3-Butadien mit anderen Monomeren wie Styrol, Methylmethacrylat, Ehylen-Propylen-Dien-Terpolymeren und/oder Halogen enthaltenden Kautschuken, wie Bromobutyl-, Chloropren-Kautschuken, aliphatischen C₃-C₂₄-Kohlenwasserstoffen und aromatisch modifizierten C₃-C₂₄-Kohlenwasserstoffen, bezogen auf die Gesamtzusammensetzung des Klebstoffs, umfasst.

14. Klebstoff nach einem der Ansprüche 1 bis 13, **dadurch gekennzeichnet, dass** er 1 % bis 20 %, vorzugsweise 4 bis 18 %, nicht ölabsorbierende Füllstoffe, bezogen auf die Gesamtzusammensetzung des Klebstoffs, umfasst.

15. Klebstoff nach einem der Ansprüche 1 bis 14, **dadurch gekennzeichnet, dass** er nicht mehr als 5 % und vorzugsweise nicht mehr als 2,5 % Pigmente, bezogen auf die Gesamtzusammensetzung des Klebstoffs, umfasst.

16. Klebstoff nach Anspruch 15, **dadurch gekennzeichnet, dass** die Pigmente aus schwarzem, rotem, grünem oder ockerfarbenem Eisenoxid bestehen.

17. Klebstoff nach Anspruch 15, **dadurch gekennzeichnet, dass** die Pigmente aus Aluminiumflocken bestehen.

18. Klebstoff nach einem der Ansprüche 3 bis 17, **dadurch gekennzeichnet, dass** die Füllstoffe und/oder die Pigmente eine Korngröße aufweisen, die zwischen 5 und 2000 µm und vorzugsweise zwischen 10 und 50 µm liegt.

19. Klebstoff nach einem der Ansprüche 1 bis 18, **dadurch gekennzeichnet, dass** der Klebstoff nicht mehr als 15 %, vorzugsweise nicht mehr als 10 % und stärker bevorzugt nicht mehr als 5 % Lösemittel, bezogen auf die Gesamtzusammensetzung des Klebstoffs, umfasst.

20. Klebstoff nach Anspruch 19, **dadurch gekennzeichnet, dass** die Lösemittel aromatische, nichtaromatische Lösemittel und/oder VOC-freie Lösemittel sind.

21. Klebstoff nach einem der Ansprüche 1 bis 20, **dadurch gekennzeichnet, dass** der Klebstoff 1 bis 4 %, vorzugsweise 1 bis 2,5 %, zusätzliche Elastomere mit einer Schmelztemperatur, die mindestens 80 °C beträgt und die nicht über der Zersetzungstemperatur der verwendeten Öle liegt, bezogen auf die Gesamtzusammensetzung des Klebstoffs, umfasst.

22. Klebstoff nach Anspruch 20, **dadurch gekennzeichnet, dass** die zusätzlichen Elastomere aus Styrol-Butadien-Styrol (SBS), Ethylen-Glycidyl-Acrylat (EGA) und/oder ataktischem Polypropylen (APP) bestehen.

23. Klebstoff nach einem der Ansprüche 1 bis 22, **dadurch gekennzeichnet, dass** der Klebstoff nicht mehr als 15 %, vorzugsweise nicht mehr als 10 % und stärker bevorzugt nicht mehr als 5 % eines Reaktiwerdünners, bezogen auf die Gesamtzusammensetzung des Klebstoffs, umfasst.

24. Klebstoff nach Anspruch 23, **dadurch gekennzeichnet, dass** der Reaktivverdünner aus Rohöl und/oder polymerisiertem Öl besteht.

25. Klebstoff nach einem der Ansprüche 1 bis 24, **dadurch gekennzeichnet, dass** der Klebstoff nicht mehr als 3 % Verstärkungsfasern, bezogen auf die Gesamtzusammensetzung des Klebstoffs, umfasst.

26. Klebstoff nach Anspruch 25, **dadurch gekennzeichnet, dass** die Verstärkungsfasern aus Cellulosefasern, Glasfasern und/oder Polyethylenfasern bestehen.

27. Klebstoff nach einem der vorangehenden Ansprüche, **dadurch gekennzeichnet, dass** der Klebstoff für Dachwerkstoffe verwendet wird.

## Revendications

1. Colle pour le collage à froid de matériaux de construction, **caractérisée en ce que** la colle contient une ou plusieurs huile(s) thixotrope(s).

2. Colle selon la revendication 1, **caractérisée en ce que** la colle contient entre 40 % et 75 %, de préférence entre 42 % et 70 % et mieux encore entre 55 % et 68 % d'huiles thixotropes, par rapport à la composition totale de la colle.

3. Colle selon la revendication 1 ou 2, **caractérisée en ce que** l'huile thixotrope est une combinaison d'une huile polymérisée rendue thixotrope au moyen d'une résine copolymère d'éthylène acétate de vinyle (EVA), d'une cire microcristalline ou d'une cire de polyéthylène présentant un point de fusion élevé, et d'une huile non polymérisée rendue thixotrope au moyen de charges d'absorption d'huile.

4. Colle selon la revendication 3, **caractérisée en ce que** l'huile thixotrope est composé de 1 % à 60 % d'huile polymérisé contenant de l'EVA, et de 1 % à 60 % d'huile non polymérisée contenant des charges d'absorption d'huile, par rapport à la composition totale de la colle.

5. Colle selon l'une quelconque des revendications 3 ou 4, **caractérisée en ce que** les charges d'absorption d'huile sont des charges contenant du Ca.

6. Colle selon l'une quelconque des revendications 1 à 5 incluse, **caractérisée en ce que** l'huile thixotrope est une huile thixotrope naturelle.

7. Colle selon la revendication 6, **caractérisée en ce que** les huiles naturelles sont constituées d'huile de lin et/ou d'huile de soja et/ou d'huile de ricin et/ou d'huile d'abrasin.

8. Colle selon l'une quelconque des revendications 3 à 7 incluse, **caractérisée en ce que** l'huile thixotrope est composée de:
(1) entre 1 % et 60 % d'huile polymérisée contenant de l'EVA par rapport à la composition totale de la colle, comprenant:
(a) entre 50 % et 99 % d'huile de lin polymérisée; et
(b) entre 1 % et 50 % d'elvax®;
(2) entre 1 % et 60 % d'huile non polymérisée contenant des charges d'absorption d'huile par rapport à la composition globale de la colle, comprenant:
(a) entre 20 % et 80 % de chaux; et
(b) entre 20 % et 80 % d'huile de lin non polymérisée.

9. Colle selon la revendication 8, **caractérisée en ce que** l'huile thixotrope est composée de:
(1) entre 2 % et 25 % d'huile polymérisée contenant de l'EVA par rapport à la composition totale de la colle, comprenant:
(a) entre 70 % et 90 % d'huile de lin polymérisée; et
(b) entre 10 % et 30 % d'elvax®;
(2) entre 40 % et 60 % d'huile non polymérisée contenant des charges d'absorption d'huile par rapport à la composition globale de la colle, comprenant:
(a) entre 60 % et 80 % de chaux; et
(b) entre 20 % et 40 % d'huile de lin non polymérisée.

10. Colle selon la revendication 9, **caractérisée en ce que** l'huile thixotrope est composée de:
(1) entre 2 % et 8 % d'huile polymérisée contenant de l'EVA par rapport à la composition totale de la colle, comprenant:
(a) entre 78 % et 90 % d'huile de lin polymérisée; et
(b) entre 10 % et 22 % d'elvax®;
(2) entre 40 % et 60 % d'huile non polymérisée contenant des charges d'absorption d'huile par rapport à la composition totale de la colle, comprenant:
(a) entre 70 % et 80 % de chaux; et
(b) entre 20 % et 30 % d'huile de lin non polymérisée.

11. Colle selon l'une quelconque des revendications précédentes 1 à 10 incluse, **caractérisée en ce que** la colle contient entre 1,1 % et 33 % d'adhésifs supplémentaires présentant une température de fusion minimum de 80°C et qui ne dépasse pas la température de décomposition des huiles utilisées, constitués de préférence de pas plus de 29 % de bitume et d'entre 1 % et 4 % de SB (styrène - butadiène), de poly-1,3 butadiène, de copolymères de 1,3 butadiène avec d'autres monomères tels que le styrène, de méthyle méthacrylate, de terpolymères d'éthylène/propylène/diène et/ou de caoutchoucs contenant des halogènes, tels que le bromobutyle, le caoutchouc chloroprène et d'hydrocarbures aromatiquement modifiés C₃-C₂₄, par rapport à la composition totale de la colle.

12. Colle selon la revendication 11, **caractérisée en ce que** la colle contient entre 5 % et 22,5 % d'adhésifs supplémentaires présentant une température de fusion minimum de 80°C et qui ne dépasse pas la température de décomposition des huiles utilisées, constitués de préférence d'entre 5 % et 20 % de bitume, et d'entre 1 % et 2,5 % de SB, de poly-1,3 butadiène, de copolymères de 1,3 butadiène avec d'autres monomères tels que le styrène, de méthyle méthacrylate, de terpolymères d'éthylène/propylène/diène et/ou de caoutchoucs contenant des halogènes, tels que le bromobutyle, le caoutchouc chloroprène, d'hydrocarbures aliphatiques C₃-C₂₄ et d'hydrocarbures aromatiquement modifiés C₃-C₂₄, par rapport à la composition totale de la colle.

13. Colle selon la revendication 12, **caractérisée en ce que** la colle contient entre 7 % et 18,5 % d'adhésifs supplémentaires présentant une température de fusion minimum de 80°C et qui ne dépasse pas la température de décomposition des huiles utilisées, constitués de préférence d'entre 6 % et 16 % de bitume, et d'entre 1 % et 2,5 % de SB, de poly-1,3 butadiène, de copolymères de 1,3 butadiène avec d'autres monomères tels que le styrène, de méthyle méthacrylate, de terpolymères d'éthylène/propylène/diène et/ou de caoutchoucs contenant des halogènes, tels que le bromobutyle, le caoutchouc chloroprène, d'hydrocarbures aliphatiques C₃-C₂₄ et d'hydrocarbures aromatiquement modifiés C₃-C₂₄, par rapport à la composition totale de la colle.

14. Colle selon l'une quelconque des revendications précédentes 1 à 13 incluse, **caractérisée en ce que** la colle contient entre 1 % et 20 %, et de préférence entre 4 % et 18 % de charges qui n'absorbent pas l'huile, par rapport à la composition totale de la colle.

15. Colle selon l'une quelconque des revendications précédentes 1 à 14 incluse, **caractérisée en ce que** la colle ne contient pas plus de 5 %, et de préférence pas plus de 2,5 % de pigments, par rapport à la composition totale de la colle.

16. Colle selon la revendication 15, **caractérisée en ce que** les pigments sont constitués d'oxyde de fer noir, rouge, vert ou ocre.

17. Colle selon la revendication 15, **caractérisée en ce que** les pigments sont constitués d'écailles d'aluminium.

18. Colle selon l'une quelconque des revendications précédentes 3 à 17 incluse, **caractérisée en ce que** les charges et/ou les pigments présentent une taille de grain comprise entre 5 µm et 2000 µm, et de préférence entre 10 µm et 50 µm.

19. Colle selon l'une quelconque des revendications précédentes 1 à 18 incluse, **caractérisée en ce que** le colle ne contient pas plus de 15 %, de préférence pas plus de 10 %, et mieux encore pas plus de 5 % de solvants, par rapport à la composition totale de la colle.

20. Colle selon la revendication 19, **caractérisée en ce que** les solvants sont des solvants aromatiques, des solvants non aromatiques et/ou des solvants exempts de VOC (composés organiques volatils).

21. Colle selon l'une quelconque des revendications précédentes 1 à 20 incluse, **caractérisée en ce que** la colle contient entre 1 % et 4 %, et de préférence entre 1 % et 2,5 % d'élastomères supplémentaires présentant une température de fusion minimum de 80°C et qui ne dépasse pas la température de décomposition des huiles utilisées, par rapport à la composition totale de la colle.

22. Colle selon la revendication 20, **caractérisée en ce que** les élastomères supplémentaires sont constitués de styrène-butadiène-styrène (SBS), d'éthylène/glycédile/acrylate (EGA) et/ou de polypropylène atactique (APP);

23. Colle selon l'une quelconque des revendications précédentes 1 à 22 incluse, **caractérisée en ce que** la colle ne contient pas plus de 15 %, de préférence pas plus de 10 %, et mieux encore pas plus de 5 % d'un diluant réactif, par rapport à la composition totale de la colle.

24. Colle selon la revendication 23, **caractérisée en ce que** le diluant réactif est constitué d'huile brute et/ou polymérisée.

25. Colle selon l'une quelconque des revendications précédentes 1 à 24 incluse, **caractérisée en ce que** la colle ne contient pas plus de 3 % de fibres de renforcement, par rapport à la composition totale de la colle.

26. Colle selon la revendication 25, **caractérisée en ce que** les fibres de renforcement sont constituées de fibres de cellulose, de fibres de verre et/ou de fibres de polyéthylène.

27. Colle selon l'une quelconque des revendications précédentes, **caractérisée en ce que** la colle est utilisée pour des matériaux de couverture.
